## Europäisches Patentamt
## European Patent Office
## Office européen des brevets

(19)

(11) Numéro de publication: **0 053 993**
**B1**

(12) **FASCICULE DE BREVET EUROPEEN**

(45) Date de publication du fascicule du brevet:
24.08.88

(21) Numéro de dépôt: **81420181.0**

(22) Date de dépôt: **09.12.81**

(51) Int. Cl.⁴: **F 16 B 7/04**

(54) Raccord externe pour éléments longilignes tels que barres, tubes, profilés.

(30) Priorité: **10.12.80 FR 8026606**

(43) Date de publication de la demande:
**16.06.82 Bulletin 82/24**

(45) Mention de la délivrance du brevet:
**24.08.88 Bulletin 88/34**

(84) Etats contractants désignés:
**AT BE CH DE GB IT LI NL SE**

(56) Documents cités:
**CH - A - 275 331**
**CH - A - 582 836**
**DE - A - 2 453 917**
**DE - B - 2 236 920**
**DE - U - 1 995 635**
**FR - A - 1 473 856**
**FR - A - 1 496 182**
**FR - A - 1 512 359**
**FR - A - 2 063 488**
**GB - A - 1 067 361**

(73) Titulaire: **Devaux, Alain, 39, Chemin de Champlong,**
**F-69450 St-Cyr-au-Mont-d'Or (FR)**

(72) Inventeur: **Devaux, Alain, 39, Chemin de Champlong,**
**F-69450 St-Cyr-au-Mont-d'Or (FR)**

ACTORUM AG

## Description

La présente invention concerne un dispositif d'assemblage du genre raccord externe moulé ou profilé, réalisant la liaison d'éléments longilignes le plus souvent tubulaires et présents simultanément en des formes de sections diverses et particulières telles qu'inscriptibles dans des figures géométriques spéciales résultant de combinaisons judicieuses de cercles, carrés, éllipses, rectangles ou autres polygones singuliers.

Dans les dispositifs connus de ce genre, décrits dans les brevets CH-A-275 231, FR-A-1 496 182, et DE-A1-2 453 917, ou bien le moyen de blocage est basé sur la déformation par rotation du profilé emmanché dans le raccord, comme dans le brevet CH-A-275 231, ou bien le raccord comporte une douille indépendante qui est déformée par introduction de la partie mâle qui assure le maintien du tube à assembler comme dans le brevet FR-A-1 496 182 ou bien la section du raccord ne résulte pas de la combinaison d'un carré avec un cercle mais de plusieurs rectangles, n'autorisant qu'une seule forme d'insert comme dans le brevet DE-A1-2 453 917.

Cette situation présente en particulier l'inconvénient de proscrire les constructions qui auraient fait appel à la combinaison de profilés de sections diverses ou alors sous pénalité d'emploi de raccords pléthoriques, non pratiques, onéreux et inesthétiques, lorsque celà ne s'avère pas impossible. Tout ceci constitue un obstacle au progrès technologique.

Le but de l'invention est de produire un type de raccord polyvalent eu égard aux profilés à assembler, donc plus universel et partant plus pratique, plus rapide de mise en œuvre procurant ainsi économie de temps et de matières premières ainsi que plus de sécurité dans le serrage.

Un exemple typique illustrant celà réside dans la confection de rayonnages de magasins ou de mobiliers métalliques pour lesquels il est souvent nécéssaire d'assembler des tubes ronds et, ou carrés en position de montants verticaux avec des profilés en U en façade et, en L ou Té transversaux.

Pour atteindre cet objectif, la présente invention concerne un raccord externe pour l'assemblage simultané de barres, tubes ou profilés de sections géométriques entre elles différentes, comportant au moins deux évidements oblongs dont la section interne résulte de la combinaison d'au moins deux figures géométriques concentriques sécantes ou inscrites, dont le profil générique (p) des évidements résulte de la combinaison de deux carrés sensiblement égaux et d'un cercle, qui sont concentriques et tels que le diamètre du cercle (d) est compris entre 1,08 et 1,15 fois la longueur des cotés du carré (f). Les axes géométriques des évidements sont distants entre eux de zéro à trois fois la diagonale du carré (f), et situés dans des positions angulaires relatives particulières telles que parallèles ou faisant entre elles un angle de 15° ou un angle multiple de celui-ci, tel que 90°. Des vis de serrage ont une position de blocage sensiblement radiale au cercle (d) ou nettement excentrée et en position tangentielle.

L'invention sera mieux comprise par l'examen des dessins ci-annexés. Ceux-ci donnent à titre d'exemples non limitatifs, description de prototypes réalisés selon ladite invention dont d'ailleurs diverses autres caractéristiques ressortent de la description détaillée qui suit.

La figure 1 est une vue en perspective d'un type de raccord moulé à trois évidements orthogonaux.

La figure 2 est une coupe longitudinale par le plan axial xx'–yy' de la figure 1.

La figure 3 est une coupe par le plan G de la figure 1.

La figure 4 est une vue partielle selon la flèche A de l'axe yy' de la figure 1.

La figure 5 montre une variante de profil interne (p) d'un raccord où le diamètre (d) égale environ 1,08 fois (f).

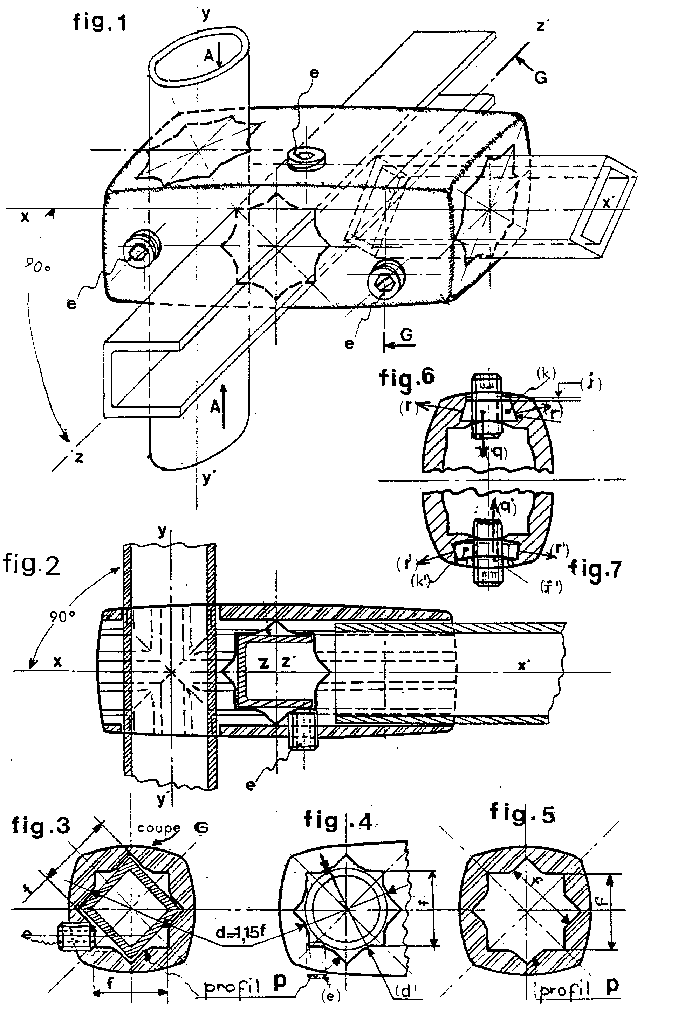

Le raccord, moulé représenté figure 1 est du type à 3 évidements orthogonaux organisés selon deux axes de symétrie yy' et zz' distants d'environ la longueur de la diagonale d'un carré (f) et qui sont perpendiculaires et concourants au troisième longitudinal selon xx'; ces évidements ont une section de profil (p) du genre: deux carrés (f) de cotés égaux et un cercle concentrique de diamètre (d) égale environ 1,15 fois (f). Ce raccord ainsi décrit réalise l'assemblage d'un tube rond, d'un autre carré et d'un profil U lesquels sont immobilisés par une vis à 6 pans creux, bout cuvette, excentrée.

Les figures 3 et 4 permettent d'apprécier l'effet accru de blocage de la vis (e) du fait de sa position déportée et tangentielle au tube.

La figure 6 est une coupe transversale type G, par le dispositif de pression. Une vis à 6 pans creux à cuvette est associée à un insert pyramidal (k) à bases carrées ou rectangles ou hexagonales, lequel dispose d'un jeu (j) vers l'exterieur.

La figure 7 illustre la variante d'un insert en forme d'écrou concave vers l'extérieur de l'évidement et à déformation élastique dans ce sens. Ces deux dispositifs ont pour objectif de transformer les réactions radiales de poinçonnement (q) ou (q'), dans le corps du raccord, en contraintes sensiblement tangentielles de compression (r) ou (r').

## Revendications

1. Raccord externe pour l'assemblage simultané de barres, tubes ou profilés de sections géométriques différentes entre elles et comportant au moins deux évidements oblongs dont la section interne résulte de la combinaison d'au moins deux figures géométriques concentriques sécantes ou inscrites, caractérisé par le fait que le profil générique (p) des évidements résulte de la combinaison de deux carrés sensiblement égaux et d'un cercle, concentriques, tels que le diamètre du cercle (d) est compris entre 1,08 et 1,15 fois la longueur des cotés du carré (f); que les axes géométriques des évidements sont distants d'environ zéro à trois fois la diagonale du carré (f) et situés dans des positions angulaires relatives particulières telles que parallèles, ou faisant entre elles un angle de 15° ou un angle multiple de celui-ci, tel que 90°; que des vis de serrage ont une position de blocage sensiblement radiale au cercle (d) ou nettement excentrée et tangentielle.

2. Raccord externe selon la revendication 1 caractérisé en ce qu'il comporte trois évidements dont deux sont orthogonaux entre eux et leurs axes géométriques yy' et zz' distants d'environ la longueur de la diagonale du carré (f), et sont de plus perpendiculaires à et concourants avec l'axe longitudinal xx' du troisième évidement.

3. Raccord externe selon l'une ou l'autre des revendications 1 & 2, caractérisé en ce que le dispositif de serrage du genre à vis de pression est associé à un insert métallique du type écrou pyramidal tronqué dont la petite base est dirigée vers l'extérieur du raccord.

4. Raccord externe selon l'une ou l'autre des revendications 1 & 2, caractérisé en ce que le dispositif de serrage du genre vis de pression est associé à un insert métallique du type écrou à 4 ou 6 pans, concave, vers l'exterieur du raccord et susceptible d'une déformation élastique.

## Claims

1. External connection for the assembly of bars, tubes or extruded bars having geometrical sections which are different from each other and which are locked in position by clamping screws, including at least two oblong recesses whose internal section results from the combination of at least two concentric secant or inscribed geometric figures, characterized by the fact that the generic profile (p) of the recesses results from the combination of two substantially equal squares and a circle, which are concentric, such that the diameter of the circle (d) is between 1.08 and 1.15 times the length of the sides of the square (f); by the fact that the geometric axes of the recesses are distant by about 0 to 3 times the diagonal of the square (f) and are situated in particular relative angular positions, such as parallel, at an angle of 15°, 30°, 45°, 60° and multiple or orthogonal; and by the fact that the clamping screws have a locking position substantially radial to the circle (d) or appreciably offcentered and tangential.

2. External connection according to claim 1, characterized in that it includes three recesses two of which are orthogonal with each other and their geometric axes yy' and zz' distant by about the length of the diagonal of a square (f), and are in addition perpendicular and concurrent to the third longitudinal of axis xx'.

3. External connection according to one or other of claims 1 and 2, characterized in that the clamping device of the pressure screw kind is associated with a metal insert of the truncated pyramid nut type whose small base is directed outwardly of the connection.

4. External connection according to one or other of claims 1 and 2, characterized in that the clamping device of the pressure screw kind is associated with a metal insert of the four or six sided concave nut type, outwardly of the connection and capable of undergoing resilient deformation.

## Patentansprüche

1. Aussenverbindungsstück für die gleichzeitige Zusammenfügung von Stangen, Rohren oder Profilstählen mit unterschiedlichen geometrischen Querschnitten und die durch Pressschrauben in Stellung gehalten werden, bestehend aus mindestens zwei länglichen Aussparungen, deren Innenquerschnitt sich aus der Verbindung von mindestens zwei konzentrischen geometrischen Figuren − schneidend oder einbeschreibend − ergibt, gekennzeichnet dadurch, dass das generische Profil (p) der Aussparungen sich aus der Verbindung von zwei ziemlich gleichen konzentrischen Quadraten und eines konzentrischen Kreises ergibt, so dass der Durchmesser des Kreises (d) zwischen 1,08 und 1,15mal die Länge der Seiten des Quadrates (f) beträgt; dass die geometrischen Achsen der Aussparungen ca. 0 bis 3mal die Diagonale des Quadrates (f) entfernt liegen und in besonderen relativen Winkelstellungen liegen, wie parallele, bei 15°, 30°, 45°, 60° Winkel und mehrfache, oder orthogonale; dass die Pressschrauben eine ziemlich radiale Stellung zum Kreis (d) oder eine deutlich exzentrische und tangentiale Blockierstellung haben.

2. Aussenverbindungsstück gemäss der Forderung 1, gekennzeichnet dadurch, dass es drei Aussparungen umfasst, wovon zwei zueinander orthogonal sind und deren geometrische Achsen yy' und zz' ca. um die Länge der Diagonale eines Quadrates (f) entfernt sind, und überdies senkrecht zur dritten Längsachse xx' stehen und durch denselben Punkt gehen.

3. Aussenverbindungsstück gemäss der einen oder anderen der Forderungen 1 und 2, gekennzeichnet dadurch, dass die Spannvorrichtung vom Typ Pressschraube mit einem Metalleinsatz vom Typ Pyramidenstumpfmutter verbunden ist, deren kleinere Basis zur Aussenseite des Verbindungsstückes gerichtet ist.

4. Aussenverbindungsstück gemäss der einen oder anderen der Forderungen 1 und 2, gekennzeichnet dadurch, dass die Spannvorrichtung vom Typ Pressschraube mit einem Metalleinsatz vom Typ Vier- oder Sechskantmutter, hohl, in Richtung der Aussenseite des Verbindungsstückes verbunden ist und elastisch durchbiegbar ist.

fig.1

fig.2

fig.3    fig.4    fig.5

fig.6    fig.7